# FASCICULE DE BREVET EUROPEEN

(11) **EP 2 303 607 B1**
(45) Date de publication et mention de la délivrance du brevet: **07.11.2012**
(21) Numéro de dépôt: 09769193.5
(22) Date de dépôt: 19.06.2009
(51) Int. Cl.: B60C 19/08

(54) **PNEUMATIQUE COMPORTANT DES MELANGES NON CONDUCTEURS DE L'ELECTRICITE ET UN CHEMIN PERMETTANT L'ECOULEMENT DES CHARGES**
REIFEN MIT ELEKTRISCH NICHT-LEITENDEN VERBINDUNGEN UND LADUNGSDURCHFLUSSWEG
TYRE COMPRISING ELECTRICALLY NON-CONDUCTING COMPOUNDS AND A PATH THROUGH WHICH CHARGE CAN FLOW

(30) Priorité: 25.06.2008 FR 0854221
(43) Date de publication de la demande: 06.04.2011
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: HINC, Henri, 63540 Romagnat (FR)
(74) Mandataire: Reynaud, Georges
(86) Numéro de dépôt international: PCT/EP2009/057668
(87) Numéro de publication internationale: WO 2009/156344

(56) Documents cités:
- WO-A-2007/097104
- US-A- 3 232 330

## Description

Le domaine de l'invention concerne les pneumatiques destinés à être montés sur des véhicules de transport. Plus spécifiquement, l'invention traite du problème de l'écoulement des charges électriques dans des pneumatiques réalisés avec des mélanges caoutchouteux non conducteurs de l'électricité.

Dans le but d'améliorer la résistance au roulement et de réduire la consommation de carburant, les pneumatiques modernes comportent des mélanges caoutchouteux comprenant à titre de charge majoritaire des charges non conductrices de l'électricité, telles que la silice, qui sont utilisés par exemple pour la réalisation des bandes de roulement. Un pneumatique de ce type est décrit, à titre illustratif, dans la publication EP 0 501 227.

En raison de la très grande résistivité de ces mélanges, leur mise en oeuvre a été accompagnée par le développement de multiples solutions techniques pour éviter l'accumulation d'électricité statique, et permettre l'écoulement des charges vers le sol lors du roulage du véhicule. Les inconvénients liés à l'accumulation de charges électriques sont bien connus des équipementiers, et sont de natures aussi diverses que la perturbation du fonctionnement de la radio embarquée dans le véhicule, les chocs électriques de l'occupant lors de sa descente du véhicule, ou encore le vieillissement accéléré du pneumatique en raison de la formation d'ozone.

Aussi les fabricants de pneumatiques s'attachent à mettre sur le marché des pneumatiques ne présentant pas ces inconvénients. La publication US 5 518 055 décrit un pneumatique dont la bande de roulement, réalisée à partir d'un mélange non conducteur, est enduite d'une fine couche de mélange conducteur. Cette couche est en contact avec les mélanges de flanc, eux-mêmes également conducteurs de l'électricité, afin de permettre l'écoulement des charges électriques.

Une autre solution, exposée dans la publication EP 0 658 452, consiste à placer un insert dans la bande de roulement. Cet insert, qui s'étend radialement préférentiellement sur toute la circonférence du pneumatique, est réalisé avec un mélange caoutchouteux conducteur de l'électricité, et relie la surface externe de la bande de roulement soit à l'une des nappes de renfort sommet, soit à tout autre partie attenante à la bande de roulement du pneumatique et suffisamment conductrice d'électricité, chacune de ces nappes étant conductrices de l'électricité. De nombreux perfectionnements ont été apportés à ce principe, selon que la bande de roulement comporte une ou plusieurs couches de matériaux conducteurs ou non conducteurs, et sont exposés à titre d'exemple dans les publications EP 0 925 903 ou EP 0 963 302.

Toutes ces méthodes ont pour objet de relier la surface externe de la bande de roulement avec une partie de la zone interne du sommet du pneumatique qui lui est juste adjacente, telle que le flanc, une nappe de renfort sommet ou de renfort carcasse, et qui présente des propriétés de conduction de l'électricité.

Toutefois, les développements récents des pneumatiques, toujours dans le but d'améliorer la résistance au roulement, conduisent à généraliser l'utilisation des mélanges faiblement conducteurs de l'électricité, à base de silice, dans la plupart des composants du pneumatique susceptibles d'effectuer un travail mécanique pendant la phase de roulage dudit pneumatique. Ainsi, en plus des bandes de roulement, on utilise de tels mélanges pour la réalisation des flancs, des nappes de renfort carcasse, des nappes d'armature sommet, ou encore des profilés de renfort sommet.

Seuls les éléments du pneumatique tels que l'anneau de renforcement du bourrelet, ou les gommes de protection talon, qui ont pour fonction d'assurer le contact entre la jante et la zone basse de l'enveloppe, sont réalisés avec des mélanges contenant une charge à base de carbone, et présentent encore la propriété de conduire l'électricité.

L'invention a pour objet de fournir une solution à la conduction des charges électriques dans des pneumatiques essentiellement réalisés à partir de mélanges caoutchouteux faiblement ou très faiblement conducteurs de l'électricité.

On entend par matériau caoutchouteux faiblement conducteur de l'électricité, un matériau à base de caoutchouc présentant une résistivité supérieure ou égale à 10⁸ Ohms/cm. De même, on entend par matériau caoutchouteux conducteur de l'électricité, un matériau à base de caoutchouc présentant une résistivité inférieure à 10⁶ Ohms/cm.

Ainsi, à titre général, l'invention concerne un pneumatique, destiné à être monté sur une roue, et spécialement conçu pour réduire la résistance au roulement. Ledit pneumatique comprend à titre indicatif :
- Une bande de roulement dont la surface radialement externe est destinée à être en contact avec le sol, ladite bande de roulement est, en règle générale, composée d'un mélange faiblement conducteur de l'électricité et comporte un moyen permettant d'assurer la conduction de l'électricité, tel que décrit par exemple dans la publication EP 0 658 452.
- Une ceinture de renfort sommet, formée d'une pluralité de nappes de renforts superposées les unes sur les autres, chaque nappe de renfort comprenant des fils, parallèles entre eux, enrobés dans un mélange caoutchouteux faiblement conducteur de l'électricité, et faisant un angle donné avec la direction circonférentielle. La ceinture de renfort sommet est en contact avec la surface radialement interne de la bande de roulement, et plus particulièrement avec le moyen permettant d'assurer la conduction de l'électricité disposé dans la bande de roulement.
- Une zone talon, destinée à assurer un contact étroit entre la roue et le pneumatique, comprenant des anneaux de renfort des bourrelets et, des gommes de protection talon en contact avec la roue, lesdites gommes de protection talon étant formées, en règle générale, à partir d'un mélange caoutchouteux conducteur de l'électricité.
- Une ou plusieurs nappes de renfort carcasse, superposées les unes sur les autres, ancrées par leurs extrémités radialement interne sur les anneaux de renfort des bourrelets, et comprenant également des fils enrobés dans un mélange caoutchouteux faiblement conducteur de l'électricité. Les fils sont parallèles entre eux et font un angle donné, généralement de 90°, avec la direction circonférentielle. En son centre, la nappe de renfort carcasse est en contact avec la nappe radialement interne de la ceinture de renfort sommet.
- Une zone flanc, destinée à assurer la protection de la nappe de renfort carcasse, et formée, en règle générale, à partir d'un mélange caoutchouteux faiblement conducteur de l'électricité.

Le terme fil doit être compris dans un sens tout à fait général, englobant un mono filament, un multi filament, un câblé ou un retors ou un assemblage équivalent, et ceci, quelle que soit la matière textile ou métallique constituant le fil, ou le traitement qu'il pourrait subir, par exemple un gommage ou un traitement de surface, pour favoriser sa liaison intime avec du caoutchouc.

Le problème qui se pose alors dans le type de pneumatique décrit ci-dessus, consiste à assurer un chemin conducteur entre la bande de roulement et la jante, en raison du fait que les nappes de renfort n'assurent plus la conduction des charges électriques entre le sommet de l'enveloppe et la nappe de renfort carcasse.

L'objet de l'invention est de fournir une solution à ce problème en proposant un pneumatique du type ci-dessus comportant un chemin permettant l'écoulement des charges.

Le pneumatique selon l'invention comporte une ceinture de renfort sommet, formée d'une pluralité de nappes de renforts superposées les unes sur les autres. Chaque nappe de renfort résulte de l'enroulement circonférentiel d'un ou plusieurs tronçons de nappe comprenant des fils, parallèles entre eux, enrobés dans un mélange caoutchouteux faiblement conducteur de l'électricité, et faisant un angle donné avec ladite direction circonférentielle, dans lequel les faces des extrémités circonférentielles desdits tronçons sont mises bout à bout pour former un joint d'aboutage.

Ce pneumatique se caractérise en ce qu'un élément linéaire continu, conducteur de l'électricité, circule circonférentiellement sur la partie radialement supérieure de chacune des nappes et transite de la partie radialement supérieure d'une première nappe de renfort à la partie radialement supérieure d'une seconde nappe de renfort qui lui est directement superposée, en passant entre les deux faces d'un joint d'aboutage de la dite seconde nappe de renfort, et en ce que ledit élément continu comporte une amorce interne circulant sur tout ou partie de la face radialement inférieure de la nappe de renfort radialement interne de ladite ceinture, et une amorce externe circulant sur tout ou partie de la circonférence de la face radialement supérieure de la nappe de renfort radialement externe de ladite ceinture.

Il suffit alors de mettre en contact l'amorce externe de l'élément linéaire avec la surface interne de la bande de roulement. Si cette dernière est également formée d'un matériaux faiblement conducteur de l'électricité il conviendra alors, de manière connue, de prévoir des moyens pour assurer la conduction de l'électricité entre la surface extérieure de la bande de roulement destinée à être en contact avec le sol, et la partie radialement interne de la bande de roulement et d'assurer la mise en contact de ce moyen, tel qu'un insert, avec l'amorce externe circulant sur la surface radialement externe de la ceinture sommet.

De même, l'amorce interne est en contact avec la surface radialement externe de la nappe de renfort carcasse. Si cette dernière est formée d'un matériau caoutchouteux faiblement conducteur de l'électricité, il convient là encore de prévoir, de manière connue, des moyens de conduction de l'électricité depuis la face radialement supérieure du centre de la nappe de renfort carcasse jusqu'aux faces internes des gommes de renfort talon, et de placer ladite amorce interne de telle sorte qu'elle soit en contact avec les dits moyens disposés sur la nappe de renfort carcasse.

De cette manière, on assure la conduction des charges électriques depuis la surface extérieure de la bande de roulement en contact avec le sol, jusqu'à la jante de la roue.

L'élément linéaire continu peut être formé par un ou plusieurs fils continus enrobés dans un mélange caoutchouteux conducteur de l'électricité ou encore, par une bandelette de faible largeur et de faible épaisseur également formée d'un matériau conducteur de l'électricité.

L'invention prévoit aussi un procédé de réalisation d'une ceinture de renfort sommet du type convenant à être placée dans un pneumatique selon l'invention.

La description qui suit s'appuie sur des modes préférentiels de réalisation de l'invention, et sur les figures 1 à 8 dans lesquelles :
- la figure 1 représente une vue schématique en perspective d'un pneumatique selon l'invention,
- la figure 2 représente une vue schématique en coupe de ce pneumatique,
- les figures 3, 4, 5 et 6 représentent des vues schématiques en perspective des différents stades d'un mode préférentiel de réalisation d'une ceinture de renfort sommet selon l'invention,
- les figures 7 et 8 représentent des vues développées d'une ceinture de renfort selon l'invention disposée sur une nappe de renfort carcasse comportant un moyen de conduction des charges électriques.

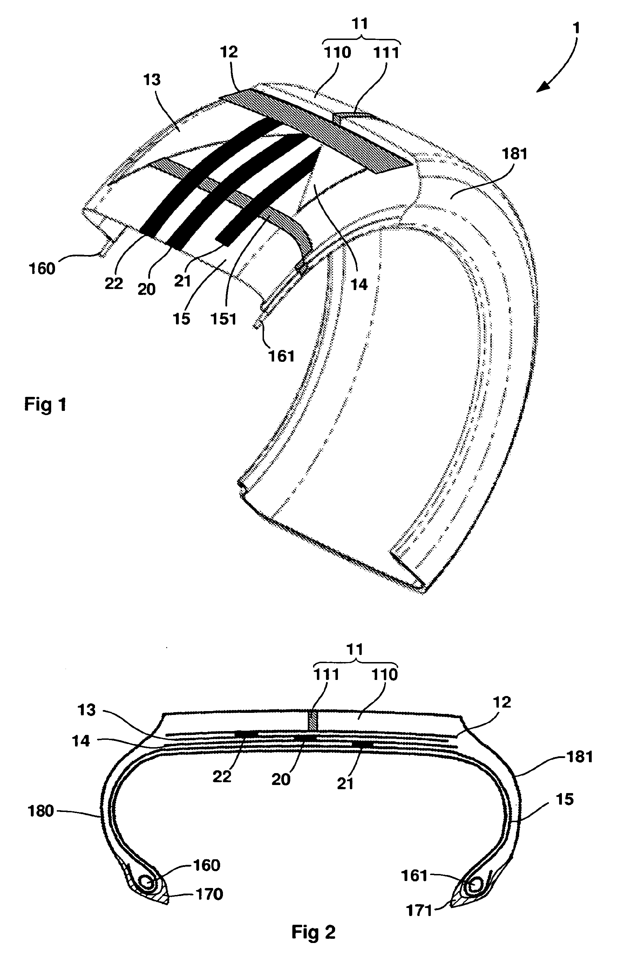

Le pneumatique 1, représenté à la figure 1, à titre d'illustration de l'invention, comporte une bande de roulement 11 comprenant des moyens 110, 111, 12, pour assurer la conduction de l'électricité entre la surface extérieure de la bande de roulement destinée à être en contact avec le sol, et la partie radialement interne de ladite bande de roulement.

Ces moyens peuvent consister à prévoir une bande de roulement réalisée avec un matériau caoutchouteux conducteur de l'électricité ou, préférentiellement, à réaliser une bande de roulement 11 formée à partir d'un mélange faiblement conducteur de l'électricité 110 et comprenant un insert 111 traversant radialement la bande de roulement. La bande de roulement 11 peut comprendre également une sous-couche 12, elle-même formée à partir d'un mélange conducteur de l'électricité ou comprenant un moyen d'écoulement des charges semblable à celui de la bande de roulement.

La ceinture de renfort sommet est composée de deux nappes de renfort 13 et 14 dont les fils forment un angle donné avec la direction circonférentielle du pneumatique.

La nappe de renfort carcasse 15 est ancrée par ses deux extrémités radialement inférieure sur des anneaux de renfort talon 160 et 161.

La figure 2 est une vue en coupe radiale du pneumatique 1, et permet de visualiser les gommes de protection talon 170 et 171, destinées à assurer le contact entre les talons du pneumatique et la jante de la roue. Ces gommes de protection talon sont en contact avec la nappe de renfort carcasse 15, et comportent un moyen permettant de conduire l'électricité depuis la partie interne jusqu'à la partie externe en contact avec la jante de la roue. Préférentiellement ces gommes de protection talon 170 et 171 sont réalisées avec un mélange caoutchouteux conducteur de l'électricité.

Enfin, le pneumatique 1, comprend des gommes de protection des flancs 180 et 181. Ces gommes de protection des flancs sont réalisées de manière préférentielle avec un mélange caoutchouteux faiblement conducteur de l'électricité.

La nappe de renfort carcasse 15 comprend un moyen 151 permettant de conduire les charges électriques depuis la surface radialement externe de la nappe de renfort carcasse jusqu'à la partie interne des gommes de protection talon 170 et 171.

La nappe de renfort carcasse 15 est formée, à titre d'illustration, par l'assemblage de laizes 150 formées de fils enrobés dans un mélange faiblement conducteur de l'électricité, entre lesquelles, au cours de l'étape de réalisation desdites laizes sur la machine de coupe de la nappe droit fil, a été insérée un tronçon de bandelette 151 formée de fils enrobés dans un mélange conducteur de l'électricité comme cela est décrit dans la demande de brevet FR 0852 556, non encore publiée, de la demanderesse.

Un élément continu 20, en l'espèce une bandelette formée d'un matériau caoutchouteux conducteur de l'électricité, circule circonférentiellement sur la partie radialement externe des nappes de renfort sommet 13 et 14.

L'amorce interne 21 circule sur la face radialement inférieure de la nappe de renfort 14 afin d'établir un contact électrique avec le moyen 151 disposé sur la nappe de renfort carcasse. L'amorce externe 22 circule sur la surface radialement externe de la nappe de renfort 13 afin d'établir un contact avec la sous couche 12.

Les charges électriques s'écoulent successivement par :
- la bande de roulement 11 qui comprend des moyens (111, 12) permettant d'établir un chemin conducteur de l'électricité entre la partie radialement externe de la bande de roulement destinée à être en contact avec le sol et la partie radialement interne 12 de ladite bande de roulement 11,
- l'amorce externe 22 de l'élément continu 20 qui est en contact avec la sous couche 12,
- l'amorce interne qui est en contact avec le moyen 151 disposé sur la nappe de renfort carcasse 15 et,
- ledit moyen 151 qui assure la conduction des charges électriques vers les gommes de protection talon (170, 171), ces dernières étant destinées à établir un contact avec la jante de la roue.

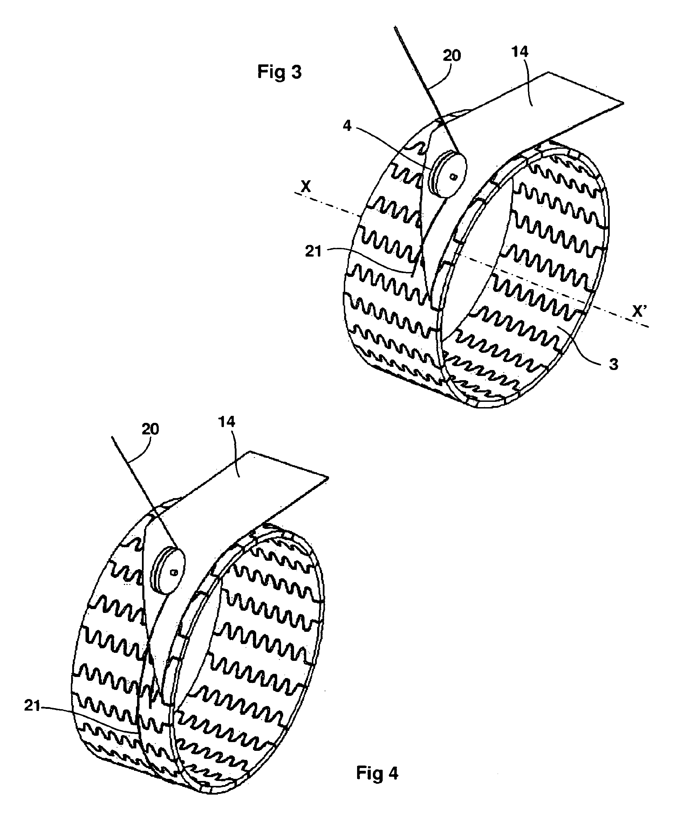

Les figures 3, 4, 5 et 6 permettent d'illustrer un mode de réalisation d'une ceinture de renfort sommet destinée à l'assemblage d'un pneumatique conforme à l'invention.

La ceinture sommet est réalisée sur une forme d'assemblage 3 cylindrique servant de surface de réception des composants. Cette forme cylindrique est animée en rotation autour de son axe XX'. Elle est formée d'éléments circulaires aptes à se déplacer radialement.

Un moyen (non représenté) permet de délivrer un élément continu, en l'espèce un fil 20 enrobé dans un mélange caoutchouteux conducteur de l'électricité, jusqu'à un moyen d'application 4.

L'amorce 21 du fil est déposée directement sur la surface de réception. La longueur de cette amorce interne peut être variable. En effet, lorsque la nappe de renfort carcasse est conductrice de l'électricité le contact entre la nappe carcasse et l'amorce interne peut s'établir sur une longueur assez courte. En revanche lorsque la nappe de renfort carcasse est formée d'un matériau faiblement conducteur de l'électricité, et que le moyen d'évacuation des charges électriques 151 est localisé en azimut, il est alors judicieux de faire circuler l'amorce interne 21 sur toute la circonférence de la face radialement inférieure de la ceinture de renfort sommet comme cela est illustré à la figure 4.

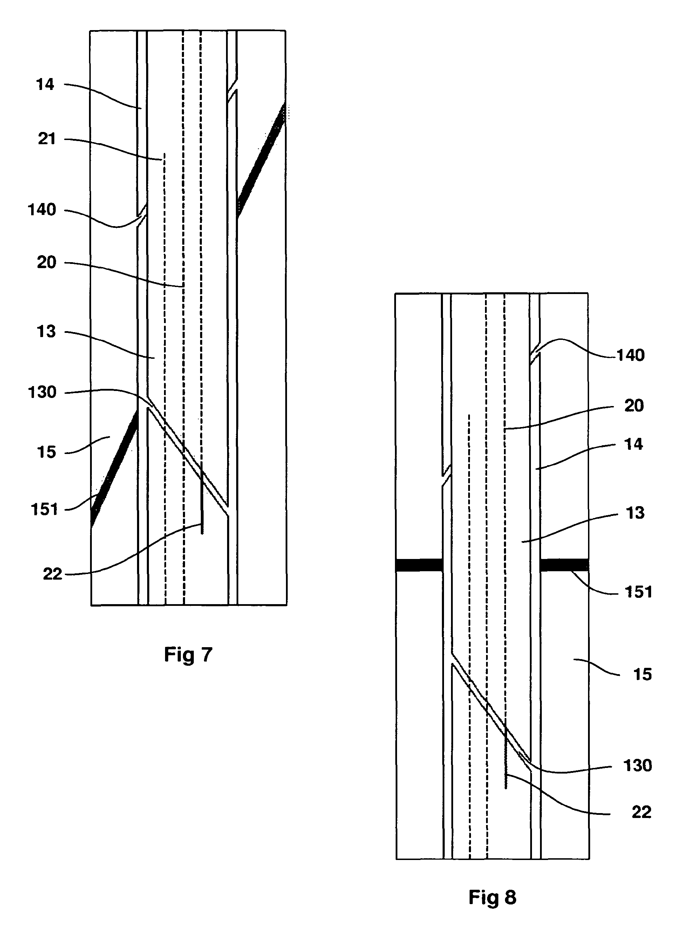

Les figures 7 et 8 illustrent ce cas, dans lequel le pneumatique 1 comporte une nappe de renfort carcasse dont les fils sont enrobés dans un mélange caoutchouteux faiblement conducteur de l'électricité. Le moyen 151, apte à conduire les charges électriques depuis la partie radialement externe de la nappe de renfort carcasse jusqu'aux gommes de renfort talon 170 et 171 est orienté radialement comme dans le cas du pneumatique illustré à la figure 1. Le moyen 151 peut aussi former un angle avec la direction circonférentielle ; dans ce cas particulier, le moyen 151 peut être constitué d'une bandelette de gomme formée d'un matériau conducteur de l'électricité.

De manière à éviter une opération d'azimutage visant à superposer l'amorce interne et le moyen 151, il est possible de prolonger l'amorce interne 21, en lui faisant effectuer un tour complet, de sorte que ladite amorce circule sur toute la circonférence de la face interne de la nappe de renfort sommet 14 radialement interne.

On dispose ensuite par enroulement une première nappe de renfort sommet 14 en réalisant un tour complet de la forme cylindrique. On s'arrange pour que le l'élément linéaire continu 20 circule sur la surface supérieure de la nappe 14.

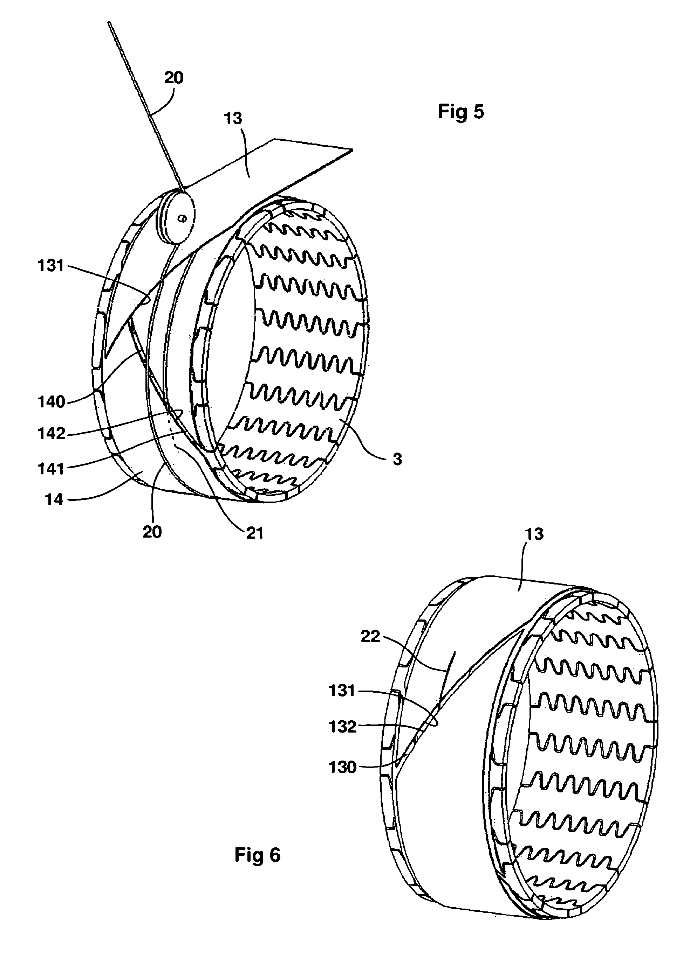

On met bout à bout les deux extrémités circonférentielles 141 et 142 de la nappe de renfort 14 pour former un joint d'aboutage 140. Le fil 20 transite de la partie radialement supérieure de la surface de réception 3 vers la partie radialement supérieure de la nappe de renfort 14 en passant entre les deux faces 141 et 142 du joint d'aboutage 140 de la nappe 14, comme cela est illustré à la figure 5.

Le tronçon suivant 13 est déposé par enroulement, de manière identique. Le fil 20 circule alors sur la surface radialement supérieure de la nappe de renfort 13 pour constituer l'amorce externe 22. On met bout à bout les extrémités circonférentielle 131 et 132 de la nappe 13 pour former le joint d'aboutage 130 comme cela est illustré par les figures 5 et 6 de sorte que le fil 20 passe entre les deux faces 131 et 132 du joint d'aboutage 130.

Ainsi, la longueur de fil déposée en continue correspond à la somme de la longueur de l'amorce interne, de la circonférence de la ceinture de renfort sommet multipliée par le nombre de nappes moins un, et de la longueur de l'amorce externe.

Le nombre de nappes de renfort constituant la ceinture de renfort n'est pas limité aux deux nappes 13 et 14 servant de support à la présente description. Dans le cas où le nombre de nappe à poser serait supérieur, il suffit de répéter les opérations d'empilage des nappes en veillant à faire passer l'élément linéaire continu 20 entre les faces des extrémités circonférentielles formant le joint d'aboutage de chacune des nappes.

De même la description qui précède concerne des nappes de renfort sommet dont la longueur est sensiblement égale à la circonférence de la forme 3. Il convient alors d'observer que les principes décrits ci-dessus s'appliquent également au cas où les nappes de renfort sommet sont formées de la juxtaposition dans la direction circonférentielle de tronçons de bandelettes de faible largeur ou au cas où les fils sont projetés sur la surface de réception comme cela est décrit par exemple dans la publication EP 248 301.

Comme cela a été évoqué dans les paragraphes précédents, l'élément linéaire continu 20 peut être formé à partir d'une bandelette de faible épaisseur constituée d'un matériau conducteur de l'électricité. La largeur de la bandelette peut utilement être comprise entre 10 et 20mm et son épaisseur entre 0,1 mm et 1mm.

L'élément linéaire continu 20 peut également être formé par un ou plusieurs fils enrobés dans un mélange conducteur de l'électricité. Dans ce cas, il peut s'avérer intéressant de déposer l'élément linaire continu en lui faisant subir des ondulations dans le sens transversal, perpendiculaire à la direction circonférentielle, de manière à éviter que le fil ne puisse brider localement les mouvements dans la direction radiale de la ceinture sommet. L'amplitude des ondulations est déterminée en fonction de l'expansion radiale maximale possible de la ceinture. On peut également choisir un fil ayant des propriétés élastiques suffisantes pour obtenir un résultat équivalent.

## Revendications

1. Pneumatique (1) comportant une ceinture de renfort sommet, formée d'une pluralité de nappes de renforts (13, 14) superposées les unes sur les autres, chaque nappe de renfort résultant de l'enroulement circonférentiel d'un ou plusieurs tronçons de nappe comprenant des fils, parallèles entre eux, enrobés dans un mélange caoutchouteux faiblement conducteur de l'électricité, et faisant un angle donné avec ladite direction circonférentielle, dans lequel les faces (131, 132, 141, 142) des extrémités circonférentielles desdits tronçons (13, 14) sont mises bout à bout pour former un joint d'aboutage (130, 140), **caractérisé en ce qu'**un élément linéaire continu (20), conducteur de l'électricité, circule circonférentiellement sur la partie radialement supérieure de chacune des nappes et transite de la partie radialement supérieure d'une première nappe de renfort à la partie radialement supérieure d'une seconde nappe de renfort qui lui est directement superposée, en passant entre les deux faces (131, 132, 141, 142) d'un joint d'aboutage (130, 140) de la dite seconde nappe de renfort, et **en ce que** ledit élément continu (20) comporte une amorce interne (21) circulant sur tout ou partie de la face radialement inférieure de la nappe de renfort radialement interne (14) de ladite ceinture et une amorce externe (22) circulant sur tout ou partie de la circonférence de la face radialement supérieure de la nappe de renfort radialement externe (13) de ladite ceinture.

2. Pneumatique selon la revendication 1 dans lequel l'amorce interne (21) circule sur toute la circonférence de la face radialement inférieure de la nappe radialement interne (14) de ladite ceinture de renfort sommet.

3. Pneumatique selon l'une des revendications 1 ou 2, dans lequel l'élément linéaire continu (20) est formé par un ou plusieurs fils enrobés dans un mélange caoutchouteux conducteur de l'électricité.

4. Pneumatique selon la revendication 3, dans lequel les fils constituants l'élément linéaire continu (20) ont des propriétés élastiques suffisantes de sorte à ne pas brider localement l'expansion radiale de la ceinture de renfort sommet.

5. Pneumatique selon la revendication 3 ou 4 dans lequel l'élément linéaire continu (20) est enroulé de manière à former des ondulations par rapport à la direction transversale.

6. Pneumatique selon l'une des revendications 1 ou 2, dans lequel l'élément linéaire continu (20) est formé par une bande de mélange caoutchouteux conducteur de l'électricité de faible épaisseur et de faible largeur.

7. Pneumatique (1) selon l'une des revendication 1 à 6, comprenant en outre une bande de roulement (11) formée d'un matériau caoutchouteux (110) faiblement conducteur de l'électricité, dans laquelle sont prévus des moyens (111, 12) pour assurer la conduction de l'électricité entre la surface extérieure de la bande de roulement destinée à être en contact avec le sol, et la partie radialement interne de la bande de roulement en contact avec la surface externe de la ceinture de renfort sommet (13) sur laquelle circule ladite amorce externe (22), dans lequel ladite amorce externe (22) est placée de telle sorte qu'elle soit en contact avec lesdits moyens (12) disposés dans la bande de roulement.

8. Pneumatique (1) selon la revendication 7 dans lequel la bande de roulement (11) comprend un insert circonférentiel (111) formé d'un matériau conducteur de l'électricité reliant la surface extérieure à la partie radialement interne de la bande de roulement en contact avec la ceinture de renfort sommet (12).

9. Pneumatique (1) selon la revendication 7 ou 8 comprenant en outre
- une zone talon, destinée à assurer un contact étroit entre la roue et le pneumatique, comprenant des anneaux de renfort des bourrelets (160, 161) et, des gommes de protection talon (170, 171) destinées à être en contact avec la jante d'une roue, lesdites gommes de protection talon (170, 171) étant formées à partir d'un mélange caoutchouteux conducteur de l'électricité,
- une ou plusieurs nappes de renfort carcasse (15) superposées les unes sur les autres, ancrées par leurs extrémités radialement interne sur les anneaux de renfort des bourrelets (160, 161), constituées de fils enrobés dans un mélange caoutchouteux faiblement conducteur de l'électricité, parallèles entre eux et faisant un angle donné, avec la direction circonférentielle, ladite nappe de renfort carcasse étant en son centre en contact avec la face radialement inférieure de la nappe de renfort sommet radialement interne (14) de ladite ceinture, et comprenant un moyen de conduction de l'électricité (151) depuis la face radialement supérieure du centre de la nappe de renfort carcasse (15) jusqu'aux faces internes des gommes de renfort talon (170, 171), et dans lequel, ladite amorce interne (21) est placée de telle sorte qu'elle soit en contact avec les dits moyens (151) disposés sur la nappe de renfort carcasse.

10. Procédé de réalisation d'une ceinture de renfort sommet destinée à l'assemblage d'un pneumatique selon l'une des revendications 1 à 9 comprenant les étapes dans lesquelles :
- on enroule une amorce (21) de l'élément linéaire continu (20) sur une surface de réception (3),
- on dépose par enroulement une première nappe de renfort sommet (14) en faisant circuler l'élément linéaire continu sur la surface radialement externe de ladite nappe,
- on met bout à bout les deux extrémités circonférentielles (141 et 142) de la première nappe de renfort (14) pour former un joint d'aboutage, en faisant passer l'élément linéaire continu (20) entre les deux faces (141, 142) du joint d'aboutage (140),
- on dépose par enroulement la nappe de renfort suivante en faisant circuler l'élément linéaire continu (20) sur la surface radialement externe de ladite nappe
- on met bout à bout les deux extrémités circonférentielles de la nappe de renfort pour former un joint d'aboutage en faisant passer l'élément linéaire continu entre les deux faces du joint d'aboutage,
- on renouvelle les deux opérations précédentes autant de fois que nécessaire,
- on dépose par enroulement la dernière nappe de renfort (13) en faisant circuler l'élément linéaire continu (20) sur la surface radialement externe de ladite nappe pour constituer l'amorce externe (22) et,
- on met bout à bout les deux extrémités circonférentielles (131 et 132) de la nappe de renfort (13) pour former un joint d'aboutage (130 en faisant passer l'élément linéaire continu entre les deux faces (131, 132) du joint d'aboutage (130),

11. Procédé selon la revendication 10 dans lequel la surface de réception est constituée par une forme cylindrique (3).

12. Procédé selon la revendication 10, dans lequel la surface de réception est constituée par l'ébauche d'un pneumatique après conformation.

## Claims

1. Tyre (1) comprising a crown reinforcing belt, formed of a plurality of reinforcing plies (13, 14) superposed on one another, each reinforcing ply resulting from the circumferential winding of one or more ply portions comprising threads, parallel to one another, coated with a weakly electrically conducting rubber compound, and making a given angle with the said circumferential direction, in which tyre the faces (131, 132, 141, 142) of the circumferential ends of the said portions (13, 14) are butted together to form a butt joint (130, 140), **characterized in that** an electrically conducting continuous linear element (20) runs circumferentially over the radially upper part of each of the plies and crosses from the radially upper part of a first reinforcing ply into the radially upper part of a second reinforcing ply superposed directly on it, passing between the two faces (131, 132, 141, 142) of a butt joint (130, 140) of the said second reinforcing ply, and **in that** the said continuous element (20) comprises an internal leader (21) running over all or part of the radially lower face of the radially internal reinforcing ply (14) of the said belt and an external leader (22) running over all or part of the circumference of the radially upper face of the radially external reinforcing ply (13) of the said belt.

2. Tyre according to Claim 1, in which the internal leader (21) runs over the entire circumference of the radially lower face of the radially internal ply (14) of the said crown reinforcing belt.

3. Tyre according to one of Claims 1 and 2, in which the continuous linear element (20) is formed of one or more threads coated with an electrically conducting rubber compound.

4. Tyre according to Claim 3, in which the threads that make up the continuous linear element (20) have sufficient elastic properties that they do not locally hamper the radial expansion of the crown reinforcing belt.

5. Tyre according to Claim 3 or 4, in which the continuous linear element (20) is wound in such a way as to form waves with respect to the transverse direction.

6. Tyre according to one of Claims 1 and 2, in which the continuous linear element (20) is formed of a thin narrow strip of electrically conducting rubber compound.

7. Tyre (1) according to one of Claims 1 to 6, further comprising a tread strip (11) formed of a weakly electrically conducting rubber compound (110), and in which tread strip there are means (111, 12) for conducting the electricity between the exterior surface of the tread strip that is intended to be in contact with the ground, and the radially internal part of the tread strip in contact with the external surface of the crown reinforcing belt (13) over which the said external leader (22) runs, in which tyre the said external leader (22) is positioned in such a way that it is in contact with the said means (12) arranged in the tread strip.

8. Tyre (1) according to Claim 7, in which the tread strip (11) comprises a circumferential insert (111) formed of an electrically conducting material connecting the exterior surface to the radially internal part of the tread strip in contact with the crown reinforcing belt (12).

9. Tyre (1) according to Claim 7 or 8, and further comprising
- a bead region intended to ensure close contact between the wheel and the tyre, comprising bead reinforcing rings (160, 161) and chafers (170, 171) intended to be in contact with the rim of a wheel, the said chafers (170, 171) being formed from an electrically conducting rubber compound,
- one or more carcass reinforcing plies (15) superposed on one another, anchored by their radially internal ends on the bead reinforcing rings (160, 161), made up of threads coated with a weakly electrically conducting rubber compound which are parallel to one another and make a given angle with the circumferential direction, the said carcass reinforcing ply being, at its centre, in contact with the radially lower face of the radially internal crown reinforcing ply (14) of the said belt, and comprising a means (151) of conducting electricity from the radially upper face of the centre of the carcass reinforcing ply (15) to the internal faces of the chafers (170, 171),
and in which the said internal leader (21) is positioned in such a way that it is in contact with the said means (151) arranged on the carcass reinforcing ply.

10. Method of producing a crown reinforcing belt intended for a tyre assembly according to one of Claims 1 to 9, comprising the steps in which:
- a leader (21) of the continuous linear element (20) is wound onto a receiving surface (3),
- a first crown reinforcing ply (14) is laid down by winding by running the continuous linear element over the radially external surface of the said ply,
- the two circumferential ends (141 and 142) of the first reinforcing ply (14) are butted together to form a butt joint, passing the continuous linear element (20) between the two faces (141, 142) of the butt joint (140),
- the next reinforcing ply is laid by winding, running the continuous linear element (20) over the radially external surface of the said ply,
- the two circumferential ends of the reinforcing ply are butted together to form a butt joint, passing the continuous linear element between the two faces of the butt joint,
- the two previous operations are repeated as many times as required,
- the last reinforcing ply (13) is laid by winding, running the continuous linear element (20) over the radially external surface of the said ply to form the external leader (22), and
- the two circumferential ends (131 and 132) of the reinforcing ply (13) are butted together to form a butt joint (130), passing the continuous linear element between the two faces (131, 132) of the butt oint (130).

11. Method according to Claim 10, in which the receiving surface consists of a cylindrical form (3).

12. Method according to Claim 10, in which the receiving surface consists of a green tyre that has been built.

## Patentansprüche

1. Luftreifen (1), der einen Scheitelverstärkungsgürtel aufweist, der von einer Vielzahl von Verstärkungslagen (13, 14) gebildet wird, die übereinandergelegt sind, wobei jede Verstärkungslage aus der Umfangswicklung eines oder mehrerer Lagenabschnitte resultiert, die zueinander parallele Drähte enthalten, die in eine schwach elektrisch leitende Kautschukmischung eingebettet sind, und einen gegebenen Winkel mit der Umfangsrichtung bilden, wobei die Seiten (131, 132, 141, 142) der Umfangsenden der Abschnitte (13, 14) stumpf aneinandergelegt werden, um eine Stoßverbindung (130, 140) zu formen, **dadurch gekennzeichnet, dass** ein elektrisch leitendes, durchgehendes lineares Element (20) in Umfangsrichtung auf dem radial oberen Teil jeder der Lagen umläuft und vom radial oberen Teil einer ersten Verstärkungslage zum radial oberen Teil einer zweiten Verstärkungslage übergeht, die direkt über ihm liegt, indem es zwischen den zwei Seiten (131, 132, 141, 142) einer Stoßverbindung (130, 140) der zweiten Verstärkungslage durchgeht, und dass das durchgehende Element (20) einen inneren Anfangsstreifen (21), der über die ganze oder einen Teil der radial unteren Seite der radial inneren Verstärkungslage (14) des Gürtels umläuft, und einen äußeren Anfangsstreifen (22) aufweist, der über den ganzen oder einen Teil des Umfangs der radial oberen Seite der radial äußeren Verstärkungslage (13) des Gürtels umläuft.

2. Luftreifen nach Anspruch 1, bei dem der innere Anfangsstreifen (21) über den ganzen Umfang der radial unteren Seite der radial inneren Lage (14) des Scheitelverstärkungsgürtels umläuft.

3. Luftreifen nach einem der Ansprüche 1 oder 2, bei dem das durchgehende lineare Element (20) von einem oder mehreren Drähten gebildet wird, die in eine elektrisch leitende Kautschukmischung eingebettet sind.

4. Luftreifen nach Anspruch 3, bei dem die das durchgehende lineare Element (20) bildenden Drähte ausreichende elastische Eigenschaften haben, um nicht lokal die radiale Ausdehnung des Scheitelverstärkungsgürtels einzuschnüren.

5. Luftreifen nach Anspruch 3 oder 4, bei dem das durchgehende lineare Element (20) so gewickelt ist, dass es Wellenformen bezüglich der Querrichtung bildet.

6. Luftreifen nach einem der Ansprüche 1 oder 2, bei dem das durchgehende lineare Element (20) von einem Band einer elektrisch leitenden Kautschukmischung geringer Dicke und geringer Breite gebildet wird.

7. Luftreifen (1) nach einem der Ansprüche 1 bis 6, der außerdem einen Laufstreifen (11) enthält, der von einem schwach elektrisch leitenden Kautschukmaterial (110) geformt wird, in dem Einrichtungen (111, 12) vorgesehen sind, um das Leiten der Elektrizität zwischen der Außenfläche des Laufstreifens, die dazu bestimmt ist, mit dem Boden in Kontakt zu sein, und dem radial inneren Teil des Laufstreifens in Kontakt mit der Außenfläche des Scheitelverstärkungsgürtels (13) zu gewährleisten, auf der der äußere Anfangsstreifen (22) umläuft, wobei der äußere Anfangsstreifen (22) so angeordnet ist, dass er mit den im Laufstreifen angeordneten Einrichtungen (12) in Kontakt ist.

8. Luftreifen (1) nach Anspruch 7, bei dem der Laufstreifen (11) einen aus einem elektrisch leitenden Material geformten Umfangseinsatz (111) enthält, der die Außenfläche mit dem radial inneren Teil des Laufstreifens verbindet, der mit dem Scheitelverstärkungsgürtel (12) in Kontakt ist.

9. Luftreifen (1) nach Anspruch 7 oder 8, der außerdem enthält:
- eine Wulstzone, die dazu bestimmt ist, einen engen Kontakt zwischen dem Rad und dem Luftreifen zu gewährleisten, die Verstärkungsringe der Wülste (160, 161) und Wulstschutzgummis (170, 171) enthält, die dazu bestimmt sind, mit der Felge eines Rads in Kontakt zu sein, wobei die Wulstschutzgummis (170, 171) ausgehend von einer elektrisch leitenden Kautschukschicht geformt werden,
- eine oder mehrere übereinandergelegte Karkassenverstärkungslagen (15), die durch ihre radial inneren Enden an den Verstärkungsringen der Wülste (160, 161) verankert sind, bestehend aus Drähten, die in eine schwach elektrisch leitende Kautschukschicht eingebettet sind, die parallel zueinander sind und einen gegebenen Winkel mit der Umfangsrichtung bilden, wobei die Karkassenverstärkungslage in ihrer Mitte mit der radial unteren Seite der radial inneren Scheitelverstärkungslage (14) des Gürtels in Kontakt ist, und eine elektrisch leitende Einrichtung (151) von der radial oberen Seite der Mitte der Karkassenverstärkungslage (15) bis zu den Innenseiten der Wulstverstärkungsgummis (170, 171) enthält,
und bei dem der innere Anfangsstreifen (21) so angeordnet ist, dass er mit den auf der Karkassenverstärkungslage angeordneten Einrichtungen (151) in Kontakt ist.

10. Verfahren zur Herstellung eines Scheitelverstärkungsgürtels, der zum Zusammenbau eines Luftreifens nach einem der Ansprüche 1 bis 9 bestimmt ist, das Schritte enthält, in denen:
- ein Anfangsstreifen (21) des durchgehenden linearen Elements (20) auf eine Aufnahmefläche (3) gewickelt wird,
- durch Wickeln eine erste Scheitelverstärkungslage (14) aufgebracht wird, indem das durchgehende lineare Element auf der radial äußeren Fläche der Lage umlaufen gelassen wird,
- die zwei Umfangsenden (141 und 142) der ersten Verstärkungslage (14) stumpf aneinander gelegt werden, um eine Stoßverbindung zu formen, indem das durchgehende lineare Element (20) zwischen den zwei Seiten (141, 142) der Stoßverbindung (140) durchgeführt wird,
- durch Wickeln die folgende Verstärkungslage aufgebracht wird, indem das durchgehende lineare Element (20) auf der radial äußeren Fläche der Lage umlaufen gelassen wird,
- die zwei Umfangsenden der Verstärkungslage stumpf aneinander gelegt werden, um eine Stoßverbindung zu formen, indem das durchgehende lineare Element zwischen den zwei Seiten der Stoßverbindung durchgeführt wird,
- die zwei vorhergehenden Arbeitsgänge so oft wie nötig wiederholt werden,
- durch Wickeln die letzte Verstärkungslage (13) aufgebracht wird, indem das durchgehende lineare Element (20) auf der axial äußeren Fläche der Lage umlaufen gelassen wird, um den äußeren Anfangsstreifen (22) zu bilden, und
- die zwei Umfangsenden (131 und 132) der Verstärkungslage (13) stumpf aneinander gelegt werden, um eine Stoßverbindung (130) zu formen, indem das durchgehende lineare Element zwischen den zwei Seiten (131, 132) der Stoßverbindung (130) durchgeführt wird.

11. Verfahren nach Anspruch 10, bei dem die Aufnahmefläche aus einer zylindrischen Form (3) besteht.

12. Verfahren nach Anspruch 10, bei dem die Aufnahmefläche aus dem Rohling eines Luftreifens nach der Formgebung besteht.
